(19) Europäisches Patentamt
European Patent Office
Office européen des brevets

(11) **EP 2 861 008 B1**

(12) **EUROPEAN PATENT SPECIFICATION**

(45) Date of publication and mention of the grant of the patent:
**01.02.2017 Bulletin 2017/05**

(21) Application number: **13808786.1**

(22) Date of filing: **03.06.2013**

(51) Int Cl.:
**H04B 17/23** (2015.01)     **H04W 24/04** (2009.01)
**H04B 17/17** (2015.01)     **H04L 12/24** (2006.01)

(86) International application number:
**PCT/CN2013/076639**

(87) International publication number:
**WO 2014/000552 (03.01.2014 Gazette 2014/01)**

(54) **ALARM METHOD AND DEVICE**

ALARMVERFAHREN UND -VORRICHTUNG

DISPOSITIF ET PROCÉDÉ D'ALARME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2012 CN 201210209752**

(43) Date of publication of application:
**15.04.2015 Bulletin 2015/16**

(73) Proprietor: **Huawei Technologies Co., Ltd.**
**Shenzhen, Guangdong 518129 (CN)**

(72) Inventors:
• **BAI, Baozhi**
**Shenzhen**
**Guangdong 518129 (CN)**
• **DING, Bin**
**Shenzhen**
**Guangdong 518129 (CN)**

(74) Representative: **Epping - Hermann - Fischer Patentanwaltsgesellschaft mbH**
**Schloßschmidstraße 5**
**80639 München (DE)**

(56) References cited:
**EP-A1- 1 274 188        CN-A- 1 479 477**
**CN-A- 1 758 572        CN-A- 1 913 402**
**CN-A- 102 427 587        CN-A- 102 711 161**
**US-A- 4 274 156        US-A1- 2002 111 161**
**US-A1- 2008 136 554        US-B1- 6 188 876**

**Description**

**TECHNICAL FIELD**

The present invention relates to the field of communications, and in particular, to an alarm method, apparatus and microwave outdoor unit.

**BACKGROUND**

In a microwave transmission system, a running state of an outdoor unit (Outdoor Unit, ODU) in the system needs to be checked in real time. When the outdoor unit encounters a hidden fault, it is necessary to discover and eliminate the hidden fault in a timely manner to ensure transmission quality of the microwave transmission system and improve customer satisfaction.

In the prior art, an outdoor unit of a microwave transmission system is troubleshot and maintained only in a case in which the outdoor unit of the microwave transmission system is damaged and an alarm is triggered. However, because an outdoor unit of a microwave transmission system is generally mounted on an iron tower, at the top of a building, or in a remote mountainous area, it takes a relatively long time to troubleshoot a damaged outdoor unit in the microwave transmission system, or it may take several days to troubleshoot some outdoor units or even one or two months, which seriously affects a service of the microwave transmission system and customer satisfaction.

Therefore, it is quite important that an outdoor unit of a microwave transmission system is capable of performing self-alarming, that is, pre-warning information is sent in a timely manner when a fault has already occurred on the outdoor unit of the microwave transmission system but is not serious enough to affect a service of the microwave transmission system.

Currently, a pre-warning objective may be achieved by checking an internal circuit state of an outdoor unit in a microwave transmission system regularly. However, because there are many detection points for the internal circuit state of the outdoor unit, generally, many detection points need to be set. In this case, not only costs are increased, but also the pre-warning objective is usually not achieved due to a false alarm.

**SUMMARY**

Embodiments of the present invention provide an alarm method and apparatus. According to the present invention, without increasing costs, a power comparing method is used to trigger an alarm for a network element with reduced power, so as to discover a possible fault before the fault occurs, so that a faulty network element can be checked and processed in advance, implementing high timeliness and excellent real-time performance.

According to a first aspect, the present invention provides an alarm method performed by an alarm apparatus of a microwave outdoor unit, the microwave outdoor unit using a 1+1 protection configuration type, the 1+1 protection configuration type being a hot standby configuration type, where the method includes: acquiring a first receive power of an active unit of the microwave outdoor unit and a second receive power of a standby unit of the microwave outdoor unit; calculating a power difference between the first receive power and the second receive power; and triggering an alarm for the standby unit when the power difference is a positive value and not less than a first threshold, or triggering an alarm for the active unit when the power difference is a negative value and not greater than a second threshold.

According to a second aspect, the present invention provides a microwave outdoor unit. The microwave outdoor unit includes an active unit, a standby unit, and an alarm apparatus;

the alarm apparatus includes an acquiring unit, configured to acquire a first receive power of the active unit and a second receive power of the standby unit;

a calculating unit, configured to calculate a power difference between the first receive power and the second receive power; and

an alarm unit, configured to trigger an alarm for the standby unit when the power difference is a positive value and not less than a first threshold, or trigger an alarm for the active unit when the power difference is a negative value and not greater than a second threshold;

where the microwave outdoor unit has a 1+1 protection configuration type, and the 1+1 protection configuration type is a hot standby configuration type.

According to the alarm method and microwave outdoor unit provided by the embodiments of the present invention, after a first receive power of an active unit and a second receive power of a standby unit are acquired or a first receive power and a first transmit power of a local unit and a second receive power and a second transmit power of a peer unit are acquired, a unit for which an alarm needs to be triggered in a network element is determined by using a power comparing method, and an alarm is triggered for the unit, so that a faulty network element can be checked and processed in advance, implementing high timeliness and excellent real-time performance.

**BRIEF DESCRIPTION OF DRAWINGS**

FIG. 1 is a schematic diagram of a 1+1 protection configuration type used by a network element according to an embodiment of the present invention;

FIG. 2 is a flowchart of an alarm method according to an embodiment of the present invention;

FIG. 3 is a schematic diagram of a 1+0 protection configuration type used by another network element according to an embodiment of the present invention;

FIG. 4 is a flowchart of another alarm method according to an embodiment of the present invention;

FIG. 5 is a schematic diagram of an alarm apparatus according to an embodiment of the present invention; and

FIG. 6 is a schematic diagram of another alarm apparatus according to an embodiment of the present invention.

**DESCRIPTION OF EMBODIMENTS**

The following further describes technical solutions of the present invention in detail with reference to the accompanying drawings and embodiments.

The present invention discloses an alarm method and apparatus. According to the method and apparatus, a first receive power of an active unit and a second receive power of a standby unit are acquired, and it is determined, by a power comparison between the first receive power and the second receive power, whether special attention needs to be paid to the standby unit and an alarm is triggered for the standby unit or whether special attention needs to be paid to the active unit and an alarm is triggered for the active unit; alternatively, a first receive power and a first transmit power of a local unit and a second receive power and a second transmit power of a peer unit are acquired, and it is determined, by a power comparison of the first receive power, the first transmit power, the second receive power, and the second transmit power, whether special attention needs to be paid to the peer unit and an alarm is triggered for the peer unit or whether special attention needs to be paid to the local unit and an alarm is triggered for the local unit.

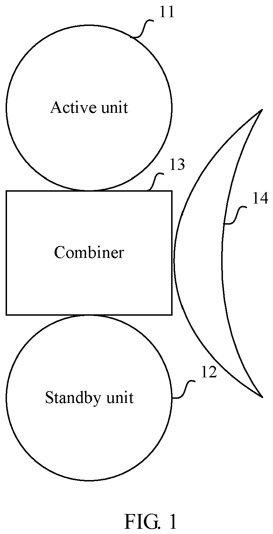

FIG. 1 is a schematic diagram of a 1+1 protection configuration type used by a network element according to an embodiment of the present invention. As shown in the figure, a network element structure of the embodiment of the present invention specifically includes: an active unit 11, a standby unit 12, a combiner 13, and an antenna 14. The network element is applied to a microwave outdoor unit and uses a 1+1 protection configuration type.

The 1+1 protection configuration type is a protection configuration type used by a microwave link and specifically includes a hot standby (Hot StandBy, HSB), a space diversity (Space Diversity, SD), or a frequency diversity (Frequency Diversity, FD) configuration type. The HSB manner refers to a method for ensuring secure device running, where two devices are both enabled, with one device working and the other device in a standby state; and once the working device is faulty, the standby device can immediately take over the work. An SD manner refers to that two or more antennas with a space interval are used to simultaneously send or receive a same piece of information, and selection is then performed to ease an impact of attenuation. Currently, only a receive diversity manner is generally used as the SD manner. An FD manner refers to a frequency division scheme in which two or more microwave frequencies with a frequency interval are used to simultaneously send or receive a same piece of information, and selection is then performed to ease the impact of attenuation.

The following uses the HSB manner as an example to specifically describe functions of components of the network element that is set to the 1+1 protection configuration type.

The active unit 11 and the standby unit 12 are responsible for radio frequency processing to implement conversion between an intermediate frequency signal and a radio frequency signal. In a normal case, the active unit 11 enables radio frequency transmission, while the standby unit 12 keep silence. When the active device 11 is faulty, the standby device 12 selectively receives a service, the radio frequency transmission of the active unit 11 is disabled and a radio frequency switch of the standby unit 12 is enabled, so as to ensure that a service sent to and received by a peer device can be recovered. Both the active unit 11 and the standby unit 12 receive a signal from the peer device, where the peer device also uses the 1+1 protection configuration type.

The combiner 13 is configured to combine signals from the two device units (the active unit 11 and the standby unit 12) and transmit a radio frequency signal to an antenna; or distributes signals from an antenna to the two device units, that is, the active unit 11 and the standby unit 12.

The antenna 14 is configured to directionally radiate radio frequency energy transmitted by the active unit 11 or the standby unit 12, or transmit received radio frequency energy to the active unit 11 and the standby unit 12.

Therefore, when a network element of a microwave outdoor unit uses a 1+1 protection configuration type, reliability of a whole communications system can be improved, and in addition, the method of using a standby unit can protect an active unit and a channel. This is because in addition to an active unit or a working channel that transmits information, a network element also has a standby unit and a standby channel that are used as a backup means. Once the active unit is faulty, or a bit error rate deteriorates to a threshold, a service can be automatically switched to the standby unit or the standby channel or forcedly switched to the standby unit or the standby channel.

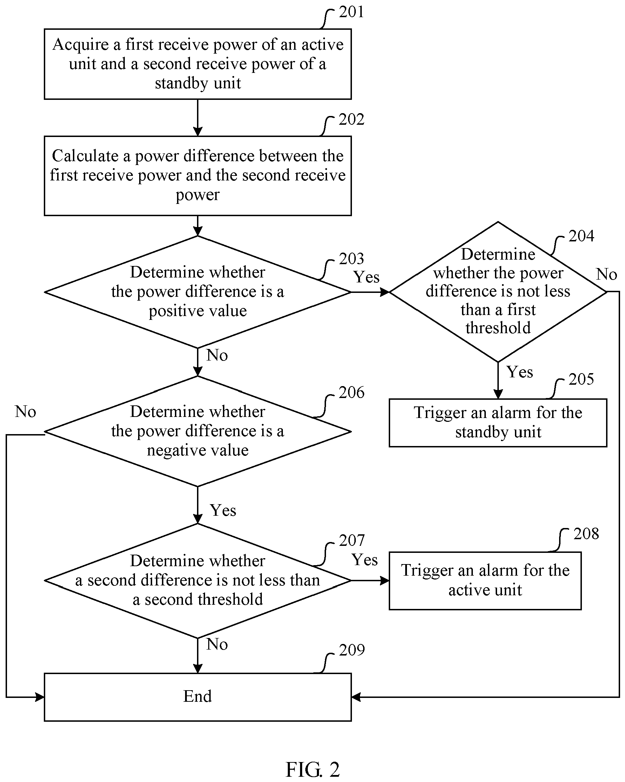

FIG. 2 is a flowchart of an alarm method according to an embodiment of the present invention. As shown in the figure, the embodiment of the present invention specifically includes the following steps:

Step 201: Acquire a first receive power RSL1 of an active unit and a second receive power RSL2 of a standby unit. Specifically, the active unit is implemented by using an outdoor unit, and the standby unit is also implemented by using an outdoor unit. Therefore, the acquired first receive power RSL1 is a first receive power RSL1 of an active outdoor unit, and likewise, the acquired second receive power RSL2 of the standby unit is a second receive power RSL2 of a standby outdoor unit.

In addition, in step 201, whether the network element is set to a 1+1 protection configuration type may also be queried first, where the 1+1 protection configuration type is a protection configuration type used by a microwave link, and in this manner, there are not only an active device, that is, an active unit, but also a standby device, that is, a standby unit. The first receive power RSL1 of the active unit and the second receive power RSL2 of the standby unit are acquired only when the network element is set to the 1+1 protection configuration type, it indicates that running states of the active unit and the standby unit of the network element can be determined automatically by using a software inspection tool, and it is determined whether alarm information needs to be sent.

Step 202: Calculate a power difference d1 between the first receive power RSL1 and the second receive power, where a calculating process of the power difference d1 is shown in formula (1).

$$d1 = RSL1 - RSL2 \qquad \text{Formula (1)}$$

Step 203: Determine whether the power difference d1 is a positive value, and perform step 204 when the power difference d1 is a positive value; or perform step 206 when the power difference d1 is not a positive value.

Step 204: Determine whether the power difference d1 is not less than a first threshold T1, and perform step 205 when a first difference d1 is not less than the first threshold T1; or perform step 209 when the first difference d1 is less than the first threshold T1.

Step 205: Trigger an alarm for the standby unit when the power difference d1 is not less than the first threshold T1, as shown in formula (2).

$$d1 \geq T1$$

Formula (2)

The first threshold T1 is set according to an actual situation, for example, the first threshold T1 is set to 15 db. Specifically, when the power difference d1 is not less than the first threshold T1, it indicates that power attenuation of the standby unit is serious at this moment, or an alarm should be triggered before this moment. In this case, special attention needs to be paid to the standby unit because it is possible that a fault occurs or a hidden fault exists, or the standby unit is faulty but a microwave transmission service is not affected yet. Therefore, an alarm is triggered in this case, so that the fault can be checked and processed in advance, so as to eliminate the hidden fault as early as possible or before a major incident occurs. This helps a lot in ensuring service running quality and improving customer satisfaction.

Step 206: Determine whether the power difference d1 is a negative value, and perform step 207 when the power difference d1 is a negative value; or perform step 209 when the power difference d1 is 0.

Step 207: Determine whether the power difference d1 is not less than a second threshold T2, and perform step 208 when the power difference d1 is not less than the second threshold T2; or perform step 209 when the power difference d1 is less than the second threshold T1.

Step 208: Trigger an alarm for the active unit when the power difference d1 is not less than the second threshold T2, as shown in formula (3).

$$d1 \geq T2$$

Formula (3)

The second threshold T2 is set according to an actual situation, for example, the second threshold T2 is set to -9 db. In addition, the second threshold T2 may be the same as or different from the first threshold T1.

Specifically, when the power difference d1 is not less than the second threshold T2, it indicates that power attenuation of the active unit is serious at this moment, or an alarm should be triggered before this moment. In this case, special attention needs to be paid to the active unit because it is possible that a fault occurs or a hidden fault exists, or the active unit is faulty but a microwave transmission service is not affected yet. Therefore, an alarm is triggered in this case, so that the fault can be checked and processed in advance, so as to eliminate the hidden fault as early as possible or before a major incident occurs. This helps a lot in ensuring service running quality and improving customer satisfaction.

Step 209: Skip sending an alarm signal if an inspection ends and indicates that the running state of the network element is normal.

In addition, the alarm method provided by the embodiment of the present invention is to add, to a software inspection tool, a method for querying a protection configuration type used by a network element, and performing power comparison to determine whether a pre-warning signal is sent, and use the software inspection tool to perform an inspection on a microwave transmission system.

Therefore, according to the alarm method provided by the embodiment of the present invention, a first receive power of an active unit and a second receive power of a standby unit are acquired, and it is determined, by a power comparison between the first receive power and the second receive power, whether an alarm is triggered for the standby unit or the active unit, thereby achieving an objective of pre-warning about a hidden fault of the active unit and the standby unit, that is, implementing a pre-warning in a timely manner before a fault of the active unit and the standby unit is serious enough to affect a service. In addition, this method is easy to implement and without excessive additional costs.

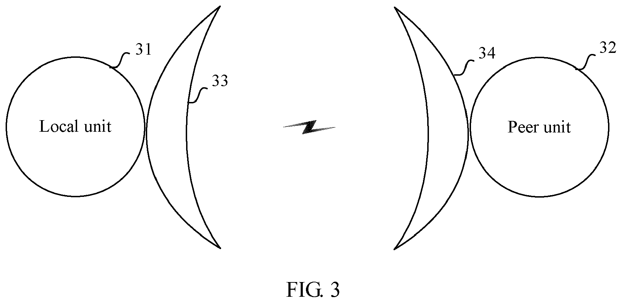

FIG. 3 is a schematic diagram of a 1+0 protection configuration type used by another network element according to an embodiment of the present invention. As shown in the figure, the network element is set with a 1+0 protection configuration, and specifically includes: a local unit 31, a peer unit 32, a local antenna 33, and a peer antenna 34. The network element is applied at two ends of a microwave link and uses a 1+0 protection configuration type. The 1+0 protection configuration type is another protection configuration type used by a microwave link. The following specifically describes functions of components of the network element that is set to a 1+0 protection configuration type.

The local unit 31 and the peer unit 32 are responsible for radio frequency processing to implement conversion between an intermediate frequency signal and a radio frequency signal. Both the local unit 31 and the peer unit 32 enable radio frequency transmission and receive a signal from a peer device.

The local antenna 33 is configured to directionally radiate radio frequency energy transmitted by the local unit 31, and transmit received radio frequency energy to the local unit 31.

The peer antenna 34 is configured to directionally radiate radio frequency energy transmitted by the peer unit 32, and transmit received radio frequency energy to the peer unit 32.

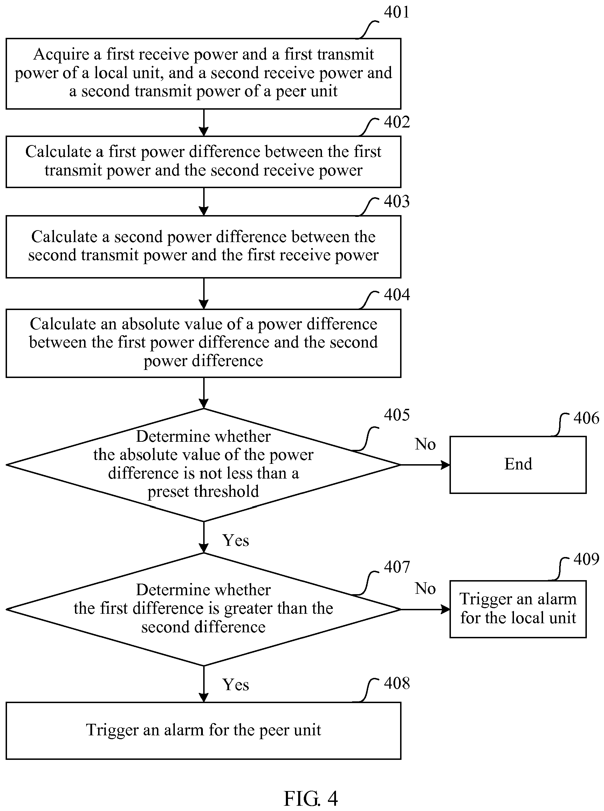

FIG. 4 is a flowchart of another alarm method according to an embodiment of the present invention. As shown in the figure, the embodiment of the present invention specifically includes the following steps:

Step 401: Acquire a first receive power RSL1 and a first transmit power TX1 of a local unit, and a second receive power RSL2 and a second transmit power TX2 of a peer unit.

Specifically, the local unit is implemented by using an outdoor unit, and the peer unit is also implemented by using an outdoor unit. Therefore, the acquired first receive power RSL1 and first transmit power TX1 are a first receive power RSL1 and a first transmit power TX1 of a local outdoor unit; and likewise, the acquired second receive power RSL2 and second transmit power TX2 are a second receive power RSL2 and a second transmit power TX2 of a peer outdoor unit.

In addition, in step 401, whether the network element is set to a 1+0 protection configuration type may also be queried first, where the 1+0 protection configuration type is another protection configuration type used by a microwave link. In this manner, there is only an active device, that is, an active unit, but no standby device, that is, a standby unit, at a local end of the microwave link; meanwhile, there is only an active device, that is, an active unit, but no standby device, that is, a standby unit, at a peer end. The first receive power RSL1 and the first transmit power TX1 of the local unit and the second receive power RSL2 and the second transmit power TX2 of the peer unit are acquired only when the network element is set to the 1+0 protection configuration type, it indicates that running states of the local unit and the peer unit that are at two ends of a link of the network element can be determined automatically by using a software inspection tool, and it is determined whether alarm information needs to be sent.

Step 402: Calculate a first power difference d1 between the first transmit power TX1 and the second receive power RSL2, where a calculating process of the first power difference d1 is shown in formula (4).

$$d1 = TX1 - RSL2 \qquad \text{Formula (4)}$$

Step 403: Calculate a second power difference d2 between the second transmit power TX2 and the first receive power RSL1, where a calculating process of the second power difference d2 is shown in formula (5).

$$D2 = TX2 - RSL1 \qquad \text{Formula (5)}$$

Step 404: Calculate an absolute value d3 of a power difference between the first power difference d1 and the second power difference d2, where a calculating process of the absolute value d3 of the power difference is shown in formula (6).

$$d3 = \left| d1 - d2 \right| \qquad \text{Formula (6)}$$

Step 405: Determine whether the absolute value d3 of the power difference between the first power difference d1 and the second power difference d2 is not less than a preset threshold T, and perform step 408 when the absolute value d3 of the power difference between the first power difference d1 and the second power difference d2 is not less than the preset threshold T; or perform step 407 when the absolute value d3 of the power difference between the first power difference d1 and the second power difference d2 is less than the preset threshold T. The preset threshold T is set according to an actual situation, for example, the preset threshold T is set to 10 db.

Step 406: Skip sending an alarm signal if an inspection ends and indicates that the running state of the network element is normal.

Step 407: Determine whether the first power difference d1 is greater than the second power difference d2, and perform step 409 when the first power difference d1 is greater than the second power difference d2; or perform step 410 when the first power difference d1 is not greater than the second power difference d2.

Step 408: Trigger an alarm for the peer unit when it is determined that the first power difference d1 is greater than the second power difference d2.

Specifically, when it is determined that the first power difference d1 is greater than the second power difference d2, it indicates that power attenuation of the peer unit is serious at this moment, or an alarm is triggered before this moment. In this case, special attention needs to be paid to the peer unit because it is possible that a fault occurs or a hidden fault exists, or the peer unit is faulty but a microwave transmission service is not affected yet. Therefore, an alarm is triggered in this case, so that the faulty network element can be checked and processed in advance, so as to eliminate the hidden fault as early as possible or before a major incident occurs. This helps a lot in ensuring service running quality and improving customer satisfaction.

Step 409: Trigger an alarm for the local unit when it is determined that the first power difference d1 is not greater than the second power difference d2.

Specifically, when it is determined that the first power difference d1 is not greater than the second power difference d2, it indicates that power attenuation of the local unit is serious at this moment, or an alarm is triggered before this moment. In this case, special attention needs to be paid to the local unit because it is possible that a fault occurs or a hidden fault exists, or the local unit is faulty but a microwave transmission service is not affected yet. Therefore, an alarm is triggered in this case, so that the faulty network element can be checked and processed in advance, so as to eliminate the hidden fault as early as possible or before a major incident occurs. This helps a lot in ensuring service running quality and improving customer satisfaction.

In addition, the alarm method provided by the embodiment of the present invention is to add, to a software inspection tool, a method for querying a protection configuration type used by a network element, and performing power comparison to determine whether a pre-warning signal is sent, and use the software inspection tool to perform an inspection on a microwave transmission system.

Therefore, according to the alarm method provided by the embodiment of the present invention, a first receive power and a first transmit power of a local unit and a second receive power and a second transmit power of a peer unit are acquired, and it is determined, by a power comparison of the first receive power, the first transmit power, the second receive power, and the second transmit power, whether an alarm is triggered for the peer outdoor unit or the local unit, thereby achieving an objective of pre-warning about a hidden fault of the local unit and the peer unit, that is, implementing a pre-warning in a timely manner before a fault of the peer unit and the local unit is serious enough to affect a service. In addition, this method is easy to implement and without excessive additional costs.

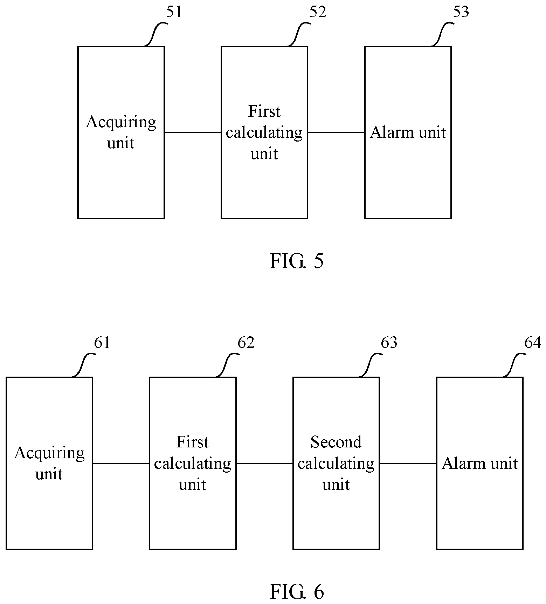

FIG. 5 is a schematic diagram of an alarm apparatus according to an embodiment of the present invention. The alarm apparatus is configured to execute the alarm method provided by the foregoing embodiment. As shown in the figure, the apparatus provided by the embodiment of the present invention specifically includes: an acquiring unit 51, a calculating unit 52, and an alarm unit 53.

The acquiring unit 51 is configured to acquire a first receive power RSL1 of an active unit and a second receive power RSL2 of a standby unit.

Specifically, the active unit is implemented by using an outdoor unit, and the standby unit is also implemented by using an outdoor unit. Therefore, the acquired first receive power RSL1 is a first receive power RSL1 of an active outdoor unit, and likewise, the acquired second receive power RSL2 of the standby unit is a second receive power RSL2 of a standby outdoor unit.

In addition, the acquiring unit 51 is further configured to first query whether a network element is set to a 1+1 protection configuration type, where the 1+1 protection configuration type is a protection configuration type used by a microwave link. The first receive power RSL1 of the active unit and the second receive power RSL2 of the standby unit are acquired only when the network element is set to the 1+1 protection configuration type, it indicates that running states of the active unit and the standby unit of the network element can be determined automatically by using a software inspection tool, and it is determined whether alarm information needs to be sent.

The calculating unit 52 is configured to calculate a power difference d1 between the first receive power RSL1 and the second receive power RSL2, where a calculating process of the power difference d1 is shown in formula (1).

The alarm unit 53 is configured to trigger an alarm for the standby unit when the power difference d1 is a positive value and not less than a first threshold T1, or trigger an alarm for the active unit when the power difference d1 is a negative value and not less than a second threshold T2. The first threshold T1 and the second threshold T2 in the alarm unit are set according to an actual situation. In addition, the second threshold T2 may be the same as or different from the first threshold T1.

Specifically, when the power difference d1 is not less than the first threshold T1, it indicates that power attenuation of the standby unit is serious at this moment, or an alarm should be triggered before this moment. In this case, special attention needs to be paid to the standby unit because it is possible that a fault occurs or a hidden fault exists, or the standby unit is faulty but a microwave transmission service is not affected yet. Therefore, an alarm is triggered in this case, so that the standby unit can be checked and processed in advance, so as to eliminate the hidden fault as early as possible or before a major incident occurs. This helps a lot in ensuring service running quality and improving customer satisfaction.

When the power difference d1 is not less than the second threshold T2, it indicates that power attenuation of the active unit is serious at this moment, or an alarm should be triggered before this moment. In this case, special attention needs to be paid to the active unit because it is possible that a fault occurs or a hidden fault exists, or the active unit is faulty but a microwave transmission service is not affected yet. Therefore, an alarm is triggered in this case, so that the active unit can be checked and processed in advance, so as to eliminate the hidden fault as early as possible or before a major incident occurs. This helps a lot in ensuring service running quality and improving customer satisfaction.

Therefore, the alarm apparatus provided by the embodiment of the present invention acquires, by using an acquiring unit, a first receive power of an active unit and a second receive power of a standby unit, and determines, by a power comparison between the first receive power and the second receive power, whether an alarm is triggered for the standby unit or the active unit, thereby achieving an objective of pre-warning about a hidden fault of the active unit and the standby unit, that is, implementing a pre-warning in a timely manner before a fault of the active unit and the standby unit is serious enough to affect a service. In addition, this method is easy to implement and without excessive additional costs.

FIG. 6 is a schematic diagram of another alarm apparatus according to an embodiment of the present invention. The alarm apparatus is configured to execute another alarm method provided by the foregoing embodiment. As shown in the figure, the apparatus provided by the embodiment of the present invention specifically includes: an acquiring unit 61, a first calculating unit 62, a second calculating unit 63, and an alarm unit 64.

The acquiring unit 61 is configured to acquire a first receive power RSL1 and a first transmit power TX1 of a local unit, and a second receive power RSL2 and a second transmit power TX2 of a peer unit.

Specifically, the local unit is implemented by using an outdoor unit, and the peer unit is also implemented by using an outdoor unit. Therefore, the acquired first receive power RSL1 and first transmit power TX1 are a first receive power RSL1 and a first transmit power TX1 of a local outdoor unit; and likewise, the acquired second receive power RSL2 and second transmit power TX2 are a second receive power RSL2 and a second transmit power TX2 of a peer outdoor unit.

In addition, the acquiring unit 61 may be further configured to first query whether a network element is set to a 1+0 protection configuration type, where the 1+0 protection configuration type is another protection configuration type used by a microwave link. The first receive power RSL1 and the first transmit power TX1 of the local unit and the second receive power RSL2 and the second transmit power TX2 of the peer unit are acquired only when the network element is set to the 1+0 protection configuration type, it indicates that running states of the local unit and the peer unit that are at two ends of a link of the network element can be determined automatically by using a software inspection tool, and it is determined whether alarm information needs to be sent.

The first calculating unit 62 is configured to calculate a first power difference d1 between the first transmit power TX1 and the second receive power RSL2, where a calculating process of the first power difference d1 is shown in formula (4).

The second calculating unit 63 is configured to calculate a second power difference d2 between the second transmit power TX2 and the first receive power RSL1, where a calculating process of the second power difference d2 is shown in formula (5).

The alarm unit 64 is configured to: if an absolute value d3 of a power difference between the first power difference d1 and the second power difference d2 is not less than a preset threshold T, trigger an alarm for the peer unit when the first power difference d1 is greater than the second power difference d2; or trigger an alarm for the local unit when the first power difference d1 is less than the second power difference d2, where a calculating process of the absolute value d3 of the power difference between the first power difference d1 and the second power difference d2 is shown in formula (6).

Specifically, when it is determined that the first power difference d1 is greater than the second power difference d2, it indicates that power attenuation of the peer unit is serious at this moment, or an alarm is triggered before this moment. In this case, special attention needs to be paid to the peer unit because it is possible that a fault occurs or a hidden fault exists, or the peer unit is faulty but a microwave transmission service is not affected yet. Therefore, an alarm is triggered in this case, so that the fault can be checked and the faulty network element can be checked and processed in advance, so as to eliminate the hidden fault as early as possible or before a major incident occurs. This helps a lot in ensuring service running quality and improving customer satisfaction.

When it is determined that the first power difference d1 is not greater than the second power difference d2, it indicates that power attenuation of the local unit is serious at this moment, or an alarm is triggered before this moment. In this case, special attention needs to be paid to the local unit because it is possible that a fault occurs or a hidden fault exists, or the local unit is faulty but a microwave transmission service is not affected yet. Therefore, an alarm is triggered in this case, so that the fault can be checked and the faulty network element can be checked and processed in advance, so as to eliminate the hidden fault as early as possible or before a major incident occurs. This helps a lot in ensuring service running quality and improving customer satisfaction.

Therefore, the alarm apparatus provided by the embodiment of the present invention acquires, by using an acquiring unit, a first receive power and a first transmit power of a local unit, and a second receive power and a second transmit power of a peer unit, and determines, by a power comparison of the first receive power, the first transmit power, the second receive power, and the second transmit power, whether an alarm is triggered for the peer outdoor unit or the local unit, thereby achieving an objective of pre-warning about a hidden fault of the local unit and the peer unit, that is, implementing a pre-warning in a timely manner before a fault of the peer unit and the local unit is serious enough to affect a service. In addition, this method is easy to implement and without excessive additional costs.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The foregoing specific embodiments further describe the objective, technical solutions, and beneficial effects of the present invention in detail. It should be understood that the foregoing descriptions are merely specific embodiments of the present invention, but are not intended to limit the protection scope of the present invention. Any modification, equivalent replacement, or improvement made without departing from the principle of the present invention should fall within the protection scope of the present invention.

**Claims**

1. An alarm method performed by an alarm apparatus of a microwave outdoor unit, the microwave outdoor unit using a 1+1 protection configuration type, the 1+1 protection configuration type being a hot standby configuration type, the method being **characterized by** comprising:

   acquiring (201) a first receive power of an active unit of the microwave outdoor unit and a second receive power of a standby unit of the microwave outdoor unit;
   calculating (202) a power difference between the first receive power and the second receive power; and
   triggering (205) an alarm for the standby unit when the power difference is a positive value and not less than a first threshold; or
   triggering (208) an alarm for the active unit when the power difference is a negative value and not greater than a second threshold.

2. The alarm method according to claim 1, wherein absolute values of the first threshold and the second threshold are the same.

3. A microwave outdoor unit, **characterized by** comprising: an active unit (11), a standby unit (12), and an alarm apparatus, wherein the alarm apparatus comprises:

   an acquiring unit (51), configured to acquire a first receive power of the active unit and a second receive power of the standby unit;
   a calculating unit (52), configured to calculate a power difference between the first receive power and the second receive power; and
   an alarm unit (53), configured to trigger an alarm for the standby unit when the power difference is a positive value and not less than a first threshold, or trigger an alarm for the active unit when the power difference is a negative value and not greater than a second threshold

   wherein the microwave outdoor unit has a 1+1 protection configuration type the 1+1 protection configuration type is a hot standby configuration type.

4. The microwave outdoor unit according to claim 3, further comprising: a combiner (13) and an antenna (14), wherein, the combiner is configured to combine signals from the active unit and the standby unit and transmit a radio frequency signal to the antenna, or distribute signals from the antenna to the active unit and the standby unit; and
   the antenna is configured to directionally radiate radio frequency energy transmitted by the active unit or the standby unit, or transmit received radio frequency energy to the active unit and the standby unit.

**Patentansprüche**

1. Alarmverfahren, durchgeführt von einer Alarmvorrichtung einer Mikrowellen-Außeneinheit, wobei bei der Mikrowellen-Außeneinheit ein 1+1-Schutz-Konfigurationstyp verwendet wird, wobei es sich bei dem 1+1-Schutz-Konfigurationstyp um einen Hot-Standby-Konfigurationstyp handelt, wobei das Verfahren **dadurch gekennzeichnet ist, dass** es umfasst:

   Erfassen (201) einer ersten Empfangsleistung einer aktiven Einheit der Mikrowellen-Außeneinheit und einer zweiten Empfangsleistung einer Standby-Einheit der Mikrowellen-Außeneinheit;
   Berechnen (202) einer Leistungsdifferenz zwischen der ersten Empfangsleistung und der zweiten Empfangsleistung und

Auslösen (205) eines Alarms für die Standby-Einheit, wenn die Leistungsdifferenz ein positiver Wert und nicht kleiner als ein erster Schwellenwert ist, oder

Auslösen (208) eines Alarms für die aktive Einheit, wenn die Leistungsdifferenz ein negativer Wert und nicht größer als ein zweiter Schwellenwert ist.

2. Alarmverfahren nach Anspruch 1, wobei absolute Werte des ersten Schwellenwerts und des zweiten Schwellenwerts dieselben sind.

3. Mikrowellen-Außeneinheit, **dadurch gekennzeichnet, dass** sie umfasst:

eine aktive Einheit (11), eine Standby-Einheit (12) und eine Alarmvorrichtung, wobei die Alarmvorrichtung umfasst:

eine Erfassungseinheit (51), die dafür konfiguriert ist, eine erste Empfangsleistung der aktiven Einheit und eine zweite Empfangsleistung der Standby-Einheit zu erfassen;
eine Berechnungseinheit (52), die dafür konfiguriert ist, eine Leistungsdifferenz zwischen der ersten Empfangsleistung und der zweiten Empfangsleistung zu berechnen, und
eine Alarmeinheit (53), die dafür konfiguriert ist, einen Alarm für die Standby-Einheit auszulösen, wenn die Leistungsdifferenz ein positiver Wert und nicht kleiner als ein erster Schwellenwert ist, oder einen Alarm für die aktive Einheit auszulösen, wenn die Leistungsdifferenz ein negativer Wert und nicht größer als ein zweiter Schwellenwert ist,
wobei die Mikrowellen-Außeneinheit einen 1+1-Schutz-Konfigurationstyp aufweist,
wobei es sich bei dem 1+1-Schutz-Konfigurationstyp um einen Hot-Standby-Konfigurationstyp handelt.

4. Mikrowellen-Außeneinheit nach Anspruch 3, die ferner umfasst:

einen Kombinator (13) und eine Antenne (14), wobei
der Kombinator dafür konfiguriert ist, Signale von der aktiven Einheit und der Standby-Einheit zu kombinieren und ein Hochfrequenzsignal an die Antenne zu übertragen, oder Signale von der Antenne zu der aktiven Einheit und der Standby-Einheit zu verteilen, und
die Antenne dafür konfiguriert ist, von der aktiven Einheit oder der Standby-Einheit übertragene Hochfrequenzenergie gerichtet abzustrahlen oder empfangene Hochfrequenzenergie zu der aktiven Einheit und der Standby-Einheit zu übertragen.

**Revendications**

1. Procédé d'alarme exécuté par un appareil d'alarme d'une unité extérieure hyperfréquence, l'unité extérieure hyperfréquence utilisant un type de configuration de protection 1+1, le type de configuration de protection 1+1 étant un type de configuration de secours automatique, le procédé étant **caractérisé en ce qu'**il comprend :

l'acquisition (201) d'une première puissance de réception d'une unité active de l'unité extérieure hyperfréquence et d'une seconde puissance de réception d'une unité de secours de l'unité extérieure hyperfréquence ;
le calcul (202) d'une différence de puissance entre la première puissance de réception et la seconde puissance de réception ; et
le déclenchement (205) d'une alarme de l'unité de secours quand la différence de puissance est une valeur positive et non inférieure à un premier seuil ; ou
le déclenchement (208) d'une alarme de l'unité active quand la différence de puissance est une valeur négative et non supérieure à un second seuil.

2. Procédé d'alarme selon la revendication 1, dans lequel des valeurs absolues du premier seuil et du second seuil sont identiques.

3. Unité extérieure hyperfréquence, **caractérisée en ce qu'**elle comprend : une unité active (11), une unité de secours (12), et un appareil d'alarme, dans laquelle l'appareil d'alarme comprend :

une unité d'acquisition (51), configurée pour acquérir une première puissance de réception de l'unité active et une seconde puissance de réception de l'unité de secours ;

une unité de calcul (52) configurée pour calculer une différence de puissance entre la première puissance de réception et la seconde puissance de réception; et

une unité d'alarme (53), configurée pour déclencher une alarme de l'unité de secours quand la différence de puissance est une valeur positive et non inférieure à un premier seuil, ou déclencher une alarme de l'unité active quand la différence de puissance est une valeur négative et non supérieure à un second seuil l'unité extérieure hyperfréquence ayant un type de configuration de protection 1+1, le type de configuration de protection 1+1 étant un type de configuration de secours automatique.

4. Unité extérieure hyperfréquence selon la revendication 3, comprenant en outre: un combineur (13) et une antenne (14), dans laquelle,

le combineur est configuré pour combiner des signaux en provenance de l'unité active et de l'unité de secours et transmettre un signal radiofréquence à l'antenne, ou pour distribuer des signaux provenant de l'antenne à l'unité active et à l'unité de secours; et

l'antenne est configurée pour rayonner directionnellement l'énergie radiofréquence transmise par l'unité active ou l'unité de secours, ou pour transmettre l'énergie radiofréquence reçue à l'unité active et à l'unité de secours.

FIG. 1

```
                                                              ┌─ 201
        ┌──────────────────────────────────┐
        │ Acquire a first receive power of an active │
        │ unit and a second receive power of a       │
        │ standby unit                               │
        └──────────────────────────────────┘
                        │
                        ▼                          ┌─ 202
        ┌──────────────────────────────────┐
        │ Calculate a power difference between the │
        │ first receive power and the second receive │
        │ power                                      │
        └──────────────────────────────────┘
                        │
                        ▼
```

201 Acquire a first receive power of an active unit and a second receive power of a standby unit

202 Calculate a power difference between the first receive power and the second receive power

203 Determine whether the power difference is a positive value — Yes →

204 Determine whether the power difference is not less than a first threshold — No →

Yes ↓

205 Trigger an alarm for the standby unit

203 No ↓

206 Determine whether the power difference is a negative value — No →

Yes ↓

207 Determine whether a second difference is not less than a second threshold — Yes →

208 Trigger an alarm for the active unit

No ↓

209 End

FIG. 2

FIG. 3

401

Acquire a first receive power and a first transmit power of a local unit, and a second receive power and a second transmit power of a peer unit

402

Calculate a first power difference between the first transmit power and the second receive power

403

Calculate a second power difference between the second transmit power and the first receive power

404

Calculate an absolute value of a power difference between the first power difference and the second power difference

405

Determine whether the absolute value of the power difference is not less than a preset threshold

No → 406

End

Yes

407

Determine whether the first difference is greater than the second difference

No → 409

Trigger an alarm for the local unit

Yes

408

Trigger an alarm for the peer unit

FIG. 4

51            52            53

| Acquiring unit | First calculating unit | Alarm unit |

**FIG. 5**

61     62     63     64

| Acquiring unit | First calculating unit | Second calculating unit | Alarm unit |

**FIG. 6**